# EUROPEAN PATENT SPECIFICATION

(11) **EP 1 077 578 B1**
(45) Date of publication and mention of the grant of the patent: **11.05.2005**
(21) Application number: 00830531.0
(22) Date of filing: 26.07.2000
(51) Int. Cl.: H04Q 7/32

(54) **Mobile phone adapter for housing and switching two or more SIM cards**
Mobiltelefonadapter zur Eingehäusung und Umschaltung zwischen zwei oder mehrere SIM Karten
Adapteur de téléphone mobile pour loger et commuer entre deux ou plusieurs cartes SIM

(30) Priority: 30.07.1999 IT RM990495
(43) Date of publication of application: 21.02.2001
(73) Proprietor: Baldan, Simone, 00143 Roma (IT); Baldan, Antonio, 00143 Roma (IT)
(72) Inventor: Baldan, Simone, 00143 Roma (IT); Baldan, Antonio, 00143 Roma (IT)

(56) References cited:
- EP-A- 0 586 081
- EP-A- 0 785 634
- WO-A-97/05729
- US-A- 5 875 404

## Description

### Description Field of invention and state of the art.

Mobile Telephony Service providers have highly different rates for different user groups. They change according to geographical position, daytime hour, typology (traditional or mobile), and service provider for the called number.

As a matter of fact, the user could save much money by using different lines and providers services (i.e. and associated rates) accordingly to his needs.

User-reserved line identification and access to provider services is managed by a microchip SIM module (or card) released by providers and inserted into the users mobile phone.

Nowadays mobile phones can host only one SIM card and mobile network providers make available only single-line SIM card.

If a user wants to take advantage of more than one service by network at different rates, switching from one provider to another, he must physically replace the SIM card. It is an uncomfortable operation, discouraging the user to do so. She/he should in fact remove the battery, unlock the card, pull a second card out from where it is usually kept, substitute the card, and, at last, put carefully out the card removed.

EP-A-0 785 634 discloses a SIM modules holder, to be attached outside the body of a mobile phone, and connected to it through a flexible circuit, having a manually operated, mechanical type, sliding switch for changing active connection between the phone and one of the external SIM modules.

External position and manual operation result in substantial weakness points: potential users could refuse the idea of getting an additional, external fitting, temporarily attached to the phone, and damages and/or accidental operation could easily occur during normal handling and/or use of the phone.

This invention would prevent the above mentioned drawbacks by allowing the user to fit two or more SIM cards inside the body of a common mobile phone set, and at the same time to switch the active connection from one card to the other simply by pressing the telephone keys.

### Description of the invention.

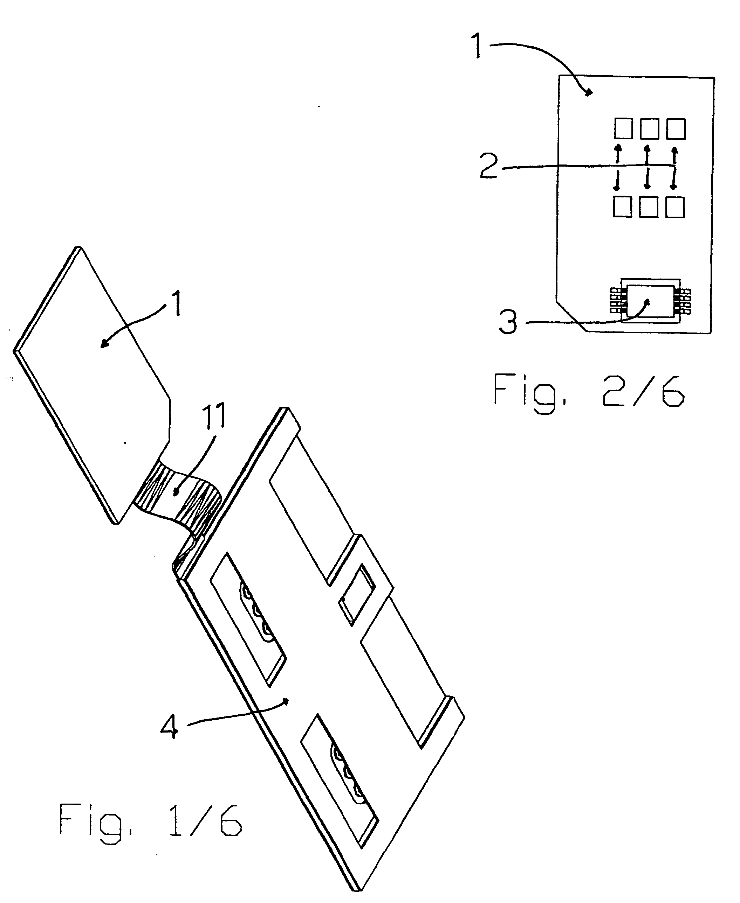

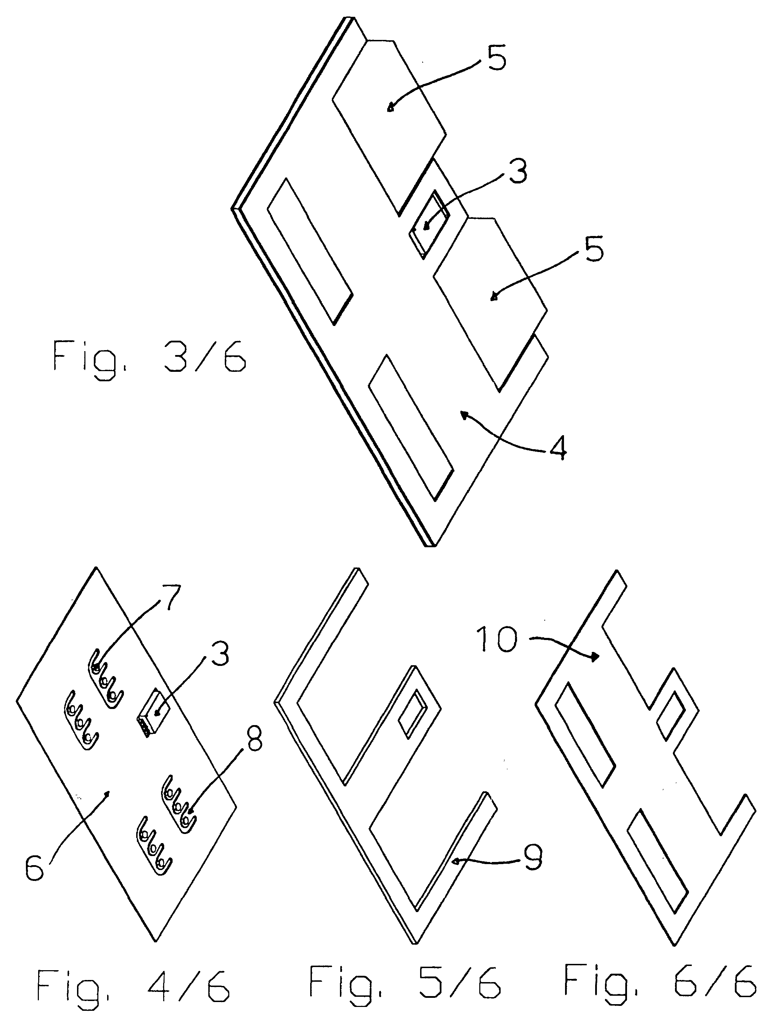

The invention is composed of two parts connected both physically and electrically through a printed circuit in flexible material:
1. An interface card (1) (see fig.1) aimed to connect the invention to the mobile phone (not in the illus.), to be inserted into the locking device for the SIM and having therefore exactly the same shape and dimensions as the SIM card.
   It must have:
   - Electric contacts (2) (see fig. 2) to the mobile phone (in compliance with ISO/IEC 7816-2)
      and, eventually, partly or wholly,
   - Electronics (3) needed for the invention to work (see fig. 2).
   The components can be wholly or partly hosted on any other of the invention elements, by simple changes on the circuits, without influencing its nature or functions (see fig. 1, 2 and 3).
2. A thin frame (4) (see fig. 1, 3) having two (or more) slots to place the SIM module (5). It has the electric contacts (7) for any single card and locking devices to hold the cards in their positions and the electric contacts stable.

Frame dimensions, primarily thickness, allow it to be inserted in the battery slot or under an external battery. In this last case a 1mm-deep slot must be created in the lower side of the battery plastic shell.

### Working Scheme

Two SIM cannot work properly in parallel on a same cell-phone without some precautions. This is because conflicts occur on chip I/O ports (bi-directional) on both cards. The "out of service" module must be disabled in order to prevent the second card from causing any interference to the actually operative card.
This can be achieved by interrupting even only one of the signals necessary to let the module work normally (from now on referred to as 'necessary signals'). The necessary signals are I/O and Reset or Clock. These are exchanged between the phone and the chip on the SIM card.
When the electric contact between the phone and the card is interrupted even if only on one of the channels bringing a necessary signal, all the SIM module functions are disabled. Any interference with the active module is then avoided. This method works on any SIM card. The remaining contacts may be connected in parallel.
The invention allows to enable one SIM card or the other, at will, intercepting and commuting electronically at least one of the necessary signals. Since mobile phone SIM modules cannot be removed while the phone is "ON", switch from one card to another must be done in "OFF".
It is the advantage of the invention the fact that SIM cards can be easily changed.

Commutation takes place through a pre-set procedure automatically activated by the electric signal generated at phone/SIM contacts by suitable key pressing sequences on phone keyboard, e.g. switching "OFF" and "ON" the telephone.

When this is the case, every time the set is switched "ON", a chip with a permanent memory on board, powered by the same Vcc, will perform the following procedure
- Retrieves last configuration set-up in permanent memory
- Intercepts one of the necessary signals coming from cell phone.
- Executes the switching by sending that signal to the module to enable. This can be achieved through a set-up scheme.
- Stores on memory the new configuration.

### Description of component parts:

An example of the invention realisation is shown in figure (1). It consists of:

### 1. Interface card (1)

It is the part of the invention that connects the invention to the mobile phone. It must be inserted in the SIM locking device and has its same shape and dimensions (in compliance with ISO/IEC 7816-2). It consists of a rigid PCB (Printed Circuit Board) of the necessary thickness, or of a coupled rigid-flexible PCB.

On it:
- Electrical contacts (2) to the mobile phone (]SO/IEC 7816-2 compliant), and, optionally,
- the electronics (3) necessary to make the invention work (here the chip plastic case is thicker than the SIM, and therefore to avoid mechanic friction with the lodging and
locking of the SIM card to the phone, the chip can be mounted die, or shifted in comparison to the locking device, and in any case as to minimize the protrusion)

### 2. Housing thin slot frame (4) for SIM modules.

It is produced by overlapping the following components:
a) A thin rigid PCB (6) (see fig. 4) having:
   Electric connections and contacts (7) to the SIM modules. Contacts can be made either in copper foil (or other conductible materials) welded on the printed circuit or through the realization of conductible relief on the circuit. In this last case different techniques are possible: selective accretion, soldering, and deposition and this must happen straight on the circuit itself made elastic. The elasticity can be obtained shaping (cutting in) the PCB base to get extended elastic supports (8); this gives the chance to get very limited thickness (≤1.5 mm).
   In order to work, at least one of the necessary signals must be sent to one card or another through separate electric connections, while the remaining corresponding SIM cards contacts can be connected in parallel.
   - The electronic components (3) that make switching possible (as described above), or the part of them not yet installed on the interface card;
b) A frame (9) (see fig. 5) in FR, ABS or other compatible material, as thick as the standard SIM module, shaped to host the cards and center them upon the contacts.
c) A highly resistant and elastic plastic cover (10), shaped to keep the SIM cards pressed on the contacts (see fig. 6).

The three parts must be glued and pressed together according to a procedure well known by printed circuits manufacturers. The result is a single structure a bit thicker than 1 mm. It can be easily installed inside any cellular phone. It may be necessary to create a small slot inside the battery plastic cover or in the battery slot.

### 3. Flexible PCB connector (11)

The mechanic and electric connection of the above described parts is accomplished by a printed circuit produced of highly resistant and flexible material (polyimmide or similar). Its thickness must be negligible when compared to the construction features of cellular phones.

Flexible connector shape and length can vary according to different cellular phone models, as a consequence of the reciprocal position and orientation that the interface card and the housing slot frame need to have in the telephone. In fact, shape and position both of the SIM locking device and of the battery can cause different shapes and positions for the lodging of the housing slot frame.

Practically, there may be many different shape and length of flexible connector, without this affecting the nature of the invention, but rather contributing to its applicability to the vast majority of cell phones on the market.

## Claims

1. Adapter/switch for mobile phones adapted for housing and switching two or more SIM modules, comprising an interface card (1) by the same shape and dimensions as a SIM card, to be lodged in the cell phone SIM card slot and connected to the phone by standard electric contacts, a thin slot frame (4) to lodge at least two SIM cards and commutation means to switch activation from one SIM to another, said interface card (1) and said slot frame (4) being connected by means of a flexible connector (11), **characterised in that**
said thin slot frame (4) comprises a printed circuit board (PCB ) base (6), with at least two sets of contacts for SIM cards (7),
said commutation means comprises at least one electronic component (3) adapted for intercepting and commuting electronically, by means of electric signals generated by operating the phone keyboard, at least one of the necessary signals exchanged between the mobile phone and a first SIM card, whereby a second SIM card is activated ,
wherein said flexible connector (11), slot frame (4), circuit board base (6) and electronic component (3) are housed inside the mobile phone, in a battery slot or in a battery cover.

2. Adapter/switch as claimed in claim 1, wherein the electronic components (3) are placed, at least partially, in the interface card (1).

3. Adapter/switch as claimed in claim 1, wherein the electronic component (3) include a microchip adapted to:
retrieve which SIM card is currently in use,
identify the necessary signal in use,
switch the necessary signal from one SIM to another,
store in memory the configuration.

4. Adapter/switch as claimed in claim 3, wherein switching takes place accordingly to a pre-set procedure.

5. Adapter/switch as claimed in claim 1, wherein in the said printed circuit board (PCB ) base (6) elastic extended supports (8) are provided for the electric contacts (7) to the SIM cards by removing material from the circuit itself.

6. Adapterswitch as claimed in claim 5, wherein one of the edge of the above mentioned elastic extended supports (8) has conductible relief.

## Patentansprüche

1. Adapter-Schalter für Mobiltelefone, ausgeführt zum Unterbringen und Schalten von zwei oder mehr SIM-Modulen, umfassend eine Schnittstellenkarte (1) derselben Form und Maße wie eine SIM-Karte, die im SIM-Kartensteckplatz des zellulären Telefons unterzubringen und mit dem Telefon durch standardmäßige elektrische Kontakte zu verbinden ist, einen dünnen Steckplatzrahmen (4) zum Unterbringen von mindestens zwei SIM-Karten und Kommutierungsmitteln zum Schalten der Aktivierung von einem SIM zu einem anderen, wobei die Schnittstellenkarte (1) und der Steckplatzrahmen (4) mittels eines flexiblen Verbinders (11) verbunden sind, **dadurch gekennzeichnet, dass**
• der dünne Steckplatzrahmen (4) eine Leiterplattenbasis (6) mit mindestens zwei Sätzen von Kontakten für SIM-Karten (7) umfasst,
• wobei das Kommutierungsmittel mindestens eine elektronische Komponente (3) umfasst, die für das elektronische Abfangen und Kommutieren mittels elektrischer Signale ausgeführt ist, die durch Bedienen der Telefontastatur erzeugt werden, wobei mindestens eines der erforderlichen Signale ausgetauscht wird zwischen dem Mobiltelefon und einer ersten SIM-Karte, wobei eine zweite SIM-Karte aktiviert ist,
• wobei der flexible Verbinder (11), der Steckplatzrahmen (4), die Leiterplattenbasis (6) und die elektronische Komponente (3) innerhalb des Mobiltelefons in einem Batterieschlitz oder in einer Batterieabdeckung untergebracht sind.

2. Adapter-Schalter nach Anspruch 1, wobei die elektronische Komponente (3) mindestens teilweise in der Schnittstellenkarte (1) platziert ist.

3. Adapter-Schalter nach Anspruch 1, wobei die elektronische Komponente (3) einen Mikrochip beinhaltet, der ausgeführt ist zum
Herausfinden, welche SIM-Karte gegenwärtig in Benutzung ist,
Identifizieren des erforderlichen Signals in Benutzung,
Schaltens des erforderlichen Signals von einem SIM zu einem anderen,
Speichern der Konfiguration im Speicher.

4. Adapter-Schalter nach Anspruch 3, wobei das Schalten gemäß einer voreingestellten Vorgehensweise stattfindet.

5. Adapter-Schalter nach Anspruch 1, wobei in der Leiterplattenbasis (6) elastische erweiterte Halterungen (8) für die elektrischen Kontakte (7) zu den SIM-Karten durch Entfernen von Material aus der Schaltung selbst bereitgestellt sind.

6. Adapter-Schalter nach Anspruch 5, wobei einer der Ränder der oben erwähnten elastischen erweiterten Halterungen (8) eine leitfähige Vertiefung aufweist.

## Revendications

1. Adaptateur/commutateur pour téléphones mobiles adapté pour abriter et commuter deux modules SIM ou davantage, comprenant une carte d'interface (1) de même forme et dimensions qu'une carte SIM, à loger dans la fente à carte SIM du téléphone cellulaire et connectée au téléphone par des contacts électriques standard, et un mince cadre à fente (4) destiné à loger au moins deux cartes SIM et des moyens de commutation pour commuter l'activation d'une SIM à une autre, ladite carte d'interface (1) et ledit cadre à fente (4) étant connectés au moyen d'un connecteur flexible (11), **caractérisé en ce que**
ledit mince cadre à fente (4) comprend une base (6) à plaque de circuits imprimés (PCI) comprenant au moins deux ensembles de contacts pour les cartes SIM (7),
ledit moyen de communication comprend au moins un composant électronique (3) adapté pour intercepter et commuter électroniquement, au moyen de signaux électriques générés en manipulant le clavier du téléphone, au moins un des signaux nécessaires échangés entre le téléphone mobile et une première carte SIM, par lequel une seconde carte SIM est activée,
lesdits connecteur flexible (11), cadre à fente (4), base à plaque de circuits imprimés (6) et composant électronique (3) sont logés à l'intérieur du téléphone mobile, dans une fente à pile ou dans un capot de pile.

2. Adaptateur/commutateur selon la revendication 1, dans lequel les composants électroniques (3) sont placés au moins partiellement dans la carte d'interface (1).

3. Adaptateur/commutateur selon la revendication 1, dans lequel le composant électronique (3) inclut une micropuce adaptée pour:
détecter quelle carte SIM est actuellement en cours d'usage,
identifier le signal nécessaire en cours d'usage,
commuter le signal nécessaire d'une SIM à une autre,
enregistrer la configuration en mémoire.

4. Adaptateur/commutateur selon la revendication 3, dans lequel la commutation a lieu en fonction d'une procédure prédéfinie.

5. Adaptateur/commutateur selon la revendication 1, dans lequel, dans ladite base (6) à plaque de circuits imprimés (PCI), des supports élastiques étendus (8) sont prévus pour les contacts électriques (7) avec les cartes SIM en enlevant de la matière du circuit lui-même.

6. Adaptateur/commutateur selon la revendication 5, dans lequel un des bords des supports élastiques étendus (8) mentionnés ci-dessus a un relief conductible.
